# EUROPEAN PATENT SPECIFICATION

(11) **EP 4 138 546 B1**
(45) Date of publication and mention of the grant of the patent: **08.01.2025**
(21) Application number: 21722001.1
(22) Date of filing: 20.04.2021
(51) Int. Cl.: A01K 5/02

(54) **A FEED DISPENSER FOR AN ANIMAL**
EIN FUTTERSPENDER FÜR EIN TIER
UN DISTRIBUTEUR D'ALIMENTATION POUR UN ANIMAL

(30) Priority: 24.04.2020 SE 2050468
(43) Date of publication of application: 01.03.2023
(73) Proprietor: DeLaval Holding AB, 147 21 Tumba (SE)
(72) Inventor: AGRICOLA, Fedde, 147 21 Tumba (SE); VANWINSEN, Chris, 147 21 Tumba (SE)
(74) Representative: DeLaval International AB
(86) International application number: PCT/SE2021/050361
(87) International publication number: WO 2021/215985

(56) References cited:
- CN-U- 210 017 415
- ES-A1- 2 184 591
- GB-A- 2 525 193
- US-B1- 6 666 167

## Description

### TECHNICAL FIELD OF THE INVENTION

The present invention relates to a feed dispenser for an animal. The feed dispenser comprises an upper section for containing the feed, a lower section for dispensing the feed, and a dosing chamber situated between the upper section and the lower section. The feed dispenser further comprises a dosing piston being coaxially arranged with the dosing chamber, wherein the dosing piston comprises a first body having a first truncated conical surface portion and a second body having a second truncated conical surface portion. The first and second truncated conical surface portions are arranged with their apexes facing each other, so that a dosing space is formed between the first and second truncated conical surface portions and the dosing chamber. The dosing piston is reciprocatable between an upper position for filling the dosing space of the dosing chamber with feed from the upper section and a lower position for discharging a dosed feed from the dosing space of the dosing chamber into the lower section of the feed dispenser.

### BACKGROUND OF THE INVENTION

EP0293520 discloses a known feed dispenser of the initially defined kind.

NL1024615 discloses another known feed dispenser for an animal. This feed dispenser differs from the initially defined feed dispenser in that the dosing piston comprises truncated conical surface portions with apexes facing the same direction (upwards) toward the upper section containing the feed. This feed dispenser is furthermore not provided with a dosing chamber. Instead the dosing piston moves upwards into the upper section, wherein the upper body with the truncated conical surface portion penetrates the feed contained in the upper section of the feed dispenser and the feed is collected in a space formed between the upper and lower truncated conical surface portions of the dosing piston penetrating the upper section of the feed dispenser.

A drawback of the known feed dispensers is that the reciprocating movement of the dosing piston compresses the feed contained in the upper section of the feed dispenser. The feed is typically a concentrate of pellets or powder that risk being compressed into a larger mass forming a conglomerate body depending on the moisture content of the surrounding environment and the feed. A fluctuating temperature in the surrounding environment additionally produces condensation that may dissolve the concentrate pellets into a powdery form, wherein the concentrate may also contain viscous liquids, such as molasses, which also promote the conglomeration of the feed into larger bodies. The compressed feed forming the larger conglomerate body (an effect also known as bridging) in the upper section reduces or completely prevents the flow of feed into the dosing chamber and further down into the lower section that dispenses the feed to the animal. In other words, the compressed feed in the upper section of the feed dispenser creates a plug that prevents the correct amount of feed or any feed at all from being dispensed to the animal. An incorrect or unreliable dispensing of feed involves a serious risk of insufficient feeding of the animal that causes a drop in both animal health and milk or meat production. A malfunctioning feed dispenser evidently also requires action or maintenance from an operator (farmer) and is not very user-friendly.

Another feed dispenser is known from US6666167B1. This dispenser comprises a food hopper containing a valve assembly, which prevents the dry particulate food in the upper part of the food hopper, from exiting the dispensing end at the lower part of the food hopper.

### SUMMARY OF THE INVENTION

An object of the present invention is that of preventing a compression of the feed contained in the upper section of the feed dispenser to thereby provide a more reliable and precise dosing of the feed from the feed dispenser. In other words, the aim is that of providing a low-maintenance and user-friendly feed dispenser. This is solved by a feed dispenser as defined in claim 1, wherein the first body is slidably received in a stationary enclosure, which is situated in the upper section containing the feed and is stationary with respect to the upper section of the feed dispenser.

In this way the stationary enclosure prevents the first (upper) body of the dosing piston from compressing the feed contained in the upper section of the feed dispenser. This reduces or eliminates the risk of forming a compressed conglomerate body of feed in the upper section of the feed dispenser by the reciprocating movement of the dosing piston. Hence, the flow of feed into the dosing chamber remains unaffected to provide a more reliable and precise dosing of the feed to the animal. Additionally, the flow of feed into and out of the dosing chamber is facilitated by the first body having a first truncated conical surface portion and the second body having a second truncated conical surface portion, wherein the first and second truncated conical surface portions are arranged with their apexes facing each other. The feed thereby smoothly flows into and out of a dosing space formed between the first and second truncated conical surface portions and the dosing chamber, which further enhances the reliable and precise dosing of the feed to the animal.

In an embodiment of the feed dispenser, the first body includes a cylindrical end portion and the stationary enclosure is forming a cylindrical casing for slidably receiving the cylindrical end portion of the first body. The cylindrical casing, which is situated in the upper section and arranged coaxially with the dosing piston and the dosing chamber, ensures an even circumferential distribution of feed around the cylindrical casing. In this way the feed contained in the upper section may evenly flow into the dosing space around the circumference. Moreover, the cylindrical end portion of the first body will slide into the stationary cylindrical casing in the upper section, which prevents the compression of the feed contained in the upper section, while the first truncated conical surface portion smoothly guides the evenly distributed feed into the dosing space formed between the first and second truncated conical surface portions and the dosing chamber.

In an embodiment of the feed dispenser, the cylindrical end portion has an outer diameter in a range of 80% - 100% of a maximum outer diameter of the first body. It may for instance be beneficial to reduce the diameter of the cylindrical end portion (and its cylindrical casing) to reduce its space occupied in the upper section. This is particularly beneficial if the upper section containing the feed is rather narrow or of relatively small diameter. The outer diameter should not however be reduced too much, because the risk of the dosing piston compressing the feed increases if the outer diameter of the cylindrical end portion is significantly smaller than the maximum outer diameter of the first body.

In a further embodiment, the feed dispenser comprises an outer cover in the form of a pipe, which is forming the upper section for containing the feed and the lower section for dispensing the feed, wherein the cylindrical dosing chamber, the dosing piston and the stationary enclosure is situated inside the pipe, and an outlet for dispensing the feed is provided at a lower end of the pipe. This type of feed dispenser is typically provided for dispensing feed (concentrate) to an animal (cow) in a milking parlour. It is particularly important that this feed dispenser is reliable and provides the correct dose of feed (concentrate) to the animal (cow). Animals (cows) that are reliably fed are more willing to come into the milking parlour and let down their milk faster. The correct dosing of feed is also crucial as the milk production of animals (cows) may drastically go down due to insufficient feeding and never come back to the same level in a lactation cycle. The cost of feed/concentrate is also relatively high, which makes the reliable and correct dosing of feed rather important for a dairy farmer. This feed dispenser further exhibits a relatively limited cross-section or diameter, wherein a compression of the feed contained in the upper section of the pipe may become particularly problematic, since it involves a risk of completely plugging the feed dispenser or dosing an insufficient/incorrect amount of feed (concentrate) to the animal (during milking). The invention is therefore particularly beneficial in conjunction with the feed dispenser of this embodiment.

In a further embodiment of the feed dispenser, the lower section of the pipe comprises a bevel surface forming a tapering shape on the pipe towards the outlet at the lower end of the pipe. As the feed from the dosing chamber falls into the lower section of the pipe, the dosed feed is in this way collected by the bevel surface forming the tapering shape on the pipe and leaves the outlet at the lower end of the pipe in a collected pile in a manger (or trough) where the animal consumes the dosed feed. The dosed feed is hereby dispensed in a more controlled manner in the manger (trough). This embodiment also provides more room for the animal to get the head into the manger and consume the feed in a comfortable way.

In another embodiment of the feed dispenser, the dosing piston is connected to a linear actuator, preferably a pneumatic cylinder, for moving the dosing piston between the upper and lower positions, wherein the linear actuator is mounted in the upper section of the feed dispenser and the stationary enclosure is arranged coaxially with the linear actuator. When the animal is intended to be fed, the linear actuator can in this way be (automatically) actuated to provide a dosed feed by moving the dosing piston to the upper position for filling the dosing chamber and thereafter to the lower position for dispensing the dosed feed to the animal. A sensor or control unit can thereby be configured to actuate the linear actuator to provide the dosed feed(s) to the animal during a desired feeding session. The linear actuator is mounted in the upper section of the feed dispenser so that the lower section of the feed dispenser remains free and unobstructed for the dosed feed that is falling from the dosing chamber. The linear actuator situated in the upper section also enables the provision of a shorter height or extension on the lower section, which in turn provides a lower fall height on the dosed feed. This reduces both the noise of the dosed feed that is falling into the manger and the risk that the dosed feed (concentrate) bounces out of the manger during the feeding session. The linear actuator is preferably a pneumatic cylinder to avoid electricity in the animal (cow) environment.

In a further embodiment of the feed dispenser, the linear actuator is connected to a control unit, which is configured to actuate the linear actuator at regular intervals during a specific time period, so that the feed dispenser is dispensing a dosed feed at the regular intervals during the specific time period. The control unit can for instance actuate the linear actuator and thereby dispense the dosed feed every 20 seconds (regular intervals) during a milking session (specific time period) in order to keep the animal (cow) fed and satisfied (stationary) during the milking session. Animals (cows) that are not fed during a milking session may become restless and more difficult to milk.

According to the invention, the first body is slidably mounted on a piston rod of the dosing piston and the second body is fixedly mounted on the piston rod of the dosing piston. In this way the first (upper) body of the dosing piston is allowed to axially slide along the piston rod, so that an axial spacing between the first body and the second body of the dosing piston is easily adjustable or variable in operation. The size of the dosing space may for instance be adjusted (increased/decreased) by mounting or dismounting one or several spacers between the slidably mounted first body and the fixedly mounted second body of the dosing piston.

According to the invention, the axial spacing between the first and second body may also vary in operation by allowing the axial spacing to increase during a downward portion of the movement of the dosing piston to the lower position, wherein the first body is abutting the dosing chamber and sealing it from the upper section as the second body continues downward to discharge the dosed feed from dosing chamber into the lower section.

According to the invention, the first (upper) body has a maximum outer diameter that is larger than an inner diameter of the dosing chamber and the second body has a maximum outer diameter that is smaller than the inner diameter of the dosing chamber, so that the second body is slidably received into the dosing chamber during an upward portion of the movement to the upper position, and the first body is abutting the dosing chamber and sliding on the piston rod to provide an axial spacing to the second body that increases during a downward portion of the movement to the lower position. In this way the second (lower) body of the dosing piston will slide into the dosing chamber and thereby close off the lower section from the upper section when the dosing piston approaches the upper position for filling the dosing space with feed from the upper section. Thereafter, the first (upper) body abuts the dosing chamber, while sliding on the piston rod, during the downward portion of the movement of the dosing piston to close off the upper section as the dosing piston approaches the lower position for discharging the dosed feed into the lower section. In other words, the embodiment prevents leakage of feed from the upper section to the lower section during the reciprocating movement of the dosing piston. Leakage prevention is not just important in order to provide the correct dose, but also in preventing the animal (cow) from bumping the feed dispenser. More precisely, animals (cows) tend to harass the feed dispenser if they obtain more feed thereby. This undesired behavior is reinforced if the animal (cow) is rewarded by obtaining more feed when bumping the feed dispenser, which in turn is detrimental to the service life of the feed dispenser.

In a further embodiment of this feed dispenser, the first body is elastically loaded towards the second body by an elastic member, such as a spring, which is mounted on the piston rod inside the stationary enclosure, wherein the elastic member is arranged to press the first body towards the second body when the axial spacing is provided between the first body and the second body. In this way the elastic member (spring) ensures a secure abutment/sealing between the first (upper) body and the dosing chamber when the axial spacing is provided between the first and second body of the dosing piston. This is particularly beneficial when the axial spacing decreases between the first and second bodies as the dosing piston is moving from the lower position toward the upper position, whereby the first body is forced by the elastic member (spring-loaded) to remain in sealing abutment against the dosing chamber and thereby prevent leakage of feed from the upper section. Preventing leakage, as mentioned previously, is not just important in order to provide the correct dose, but also in preventing the animal (cow) from bumping the feed dispenser.

In another embodiment of the feed dispenser, the dosing chamber has an upper annular end wall, which is facing the upper section and is sloping towards the dosing space of the dosing chamber, so that the upper annular end wall is forming an apex angle as seen in a longitudinal section of the dosing chamber. In this way the upper annular end wall funnels the feed into the dosing space of the dosing chamber. The sloping annular end wall thereby further forms a suitable abutment/sealing surface for the first truncated conical surface portion in case of the previous embodiments. Hence, in a further embodiment, the first truncated conical surface portion is forming an apex angle that corresponds to the apex angle of the upper annular end wall of the dosing chamber. The corresponding (same) apex angles ensures a extended surface abutment between the surfaces, which reduces the pressure and wear on these surfaces as the first truncated conical surface portion of the reciprocating dosing piston is repeatedly brought into contact with the upper annular end wall of the dosing chamber. The embodiment is also beneficial in guiding the dosing piston into a coaxial relationship with the dosing chamber. In other words, the embodiment ensures a centering of the reciprocating dosing piston in the dosing chamber.

In a further embodiment of the feed dispenser, the dosing chamber has a lower annular end wall, which is facing the lower section and is sloping towards the dosing space of the cylindrical dosing chamber, so that the lower annular end wall is forming an apex angle as seen in a longitudinal section of the dosing chamber. This embodiment also/further ensures a centering of the reciprocating dosing piston in the dosing chamber. The second truncated conical surface portion may hereby also form an apex angle that corresponds to the apex angle of the lower annular end wall of the cylindrical dosing chamber.

In another embodiment of the feed dispenser, the upper section, the lower section and the dosing chamber situated between the upper section and the lower section define a total height extension of the feed dispenser, wherein a relative height extension on the lower section amounts to at most 25%, preferably at most 20%, of the total height extension of the feed dispenser. This reduces the fall height of the feed, which reduces both the noise of the dosed feed that is falling into a manger and the risk that the dosed feed (concentrate) bounces out of the manger during the feeding session. Hence, it provides a calmer and less messy feeding of the animal. The height extension of the lower section preferably amounts to at most 20 cm, or more preferably at most 15 cm.

In a further embodiment of the feed dispenser, the first body comprises an annular shoulder between the first truncated conical surface portion and an outer circumference of the first body, wherein an annular cutting edge for the feed is formed in a transition between the annular shoulder and the outer circumference of the first body. The annular shoulder is hereby configured to reduce an inner angle formed at the transition to the outer circumference on the first body and thereby provide a relatively sharper annular (cutting) edge suitable for cutting through the feed during the downward movement of the dosing piston. This is particularly beneficial if the feed is a concentrate of pellets, since the annular cutting edge can cut through the pellets located around the outer circumference and prevent them from getting stuck or crushed between the first body and the dosing chamber. This not only enhances the reliability and precision of the feed dispenser, but also reduces/eliminates noise that may arise from pellets being crushed between the first body and the dosing chamber during the downward movement of the dosing piston.

According to a further embodiment of the feed dispenser, the first body comprises a rounded or chamfered top surface at the apex of the truncated conical surface portion. The rounded/chamfered top surface at the apex prevents feed (pellets) from getting stuck or crushed between the apexes of the first and second truncated conical surface portions of the dosing piston. In addition or alternatively the second body may also comprise a rounded or chamfered top surface at the apex. In other words, the risk of pellets getting stuck or being crushed between the apexes is reduced compared to having strictly horizontal (planar) top surfaces at the apexes of the truncated conical surface portions. This also enhances the reliability and precision of the feed dispenser as well as reduces/eliminates the noise that may arise from pellets being crushed between the apexes.

In a further embodiment of the feed dispenser, the dosing chamber comprises a cylindrical inner wall portion, which is surrounding the dosing piston, the cylindrical inner wall portion being configured with such a height that the cylindrical inner wall portion is forming an enclosed dosing space with the first truncated conical surface portion and the second truncated conical surface portion in an intermediate position of the dosing piston. A specific amount of dosed feed hereby occupies the dosing space, which is enclosed or delimited by the cylindrical inner wall of the dosing chamber and the first (upper) and second (lower) truncated conical surface portions of the dosing piston in the intermediate position. The intermediate position is forming a transition between the upper position for filling the dosing chamber and the lower position for discharging the feed, whereby the height of the cylindrical inner wall effectively encloses the dosing piston to prevent leakage of feed by closing off the upper section from the lower section when dosing piston reaches the intermediate position.

### BRIEF DESCRIPTION OF THE DRAWINGS

Fig. 1 shows a feed dispenser according to a first detailed embodiment of the invention,
Fig. 2 shows an outer cover of the feed dispenser according to the first embodiment,
Figs. 3A - 3C show a sequence of a dosing piston moving from an upper position to a lower position in the feed dispenser of the first embodiment, and
Fig 4. shows a feed dispenser according to a second detailed embodiment of the invention.

### DETAILED DESCRIPTION OF EMBODIMENTS

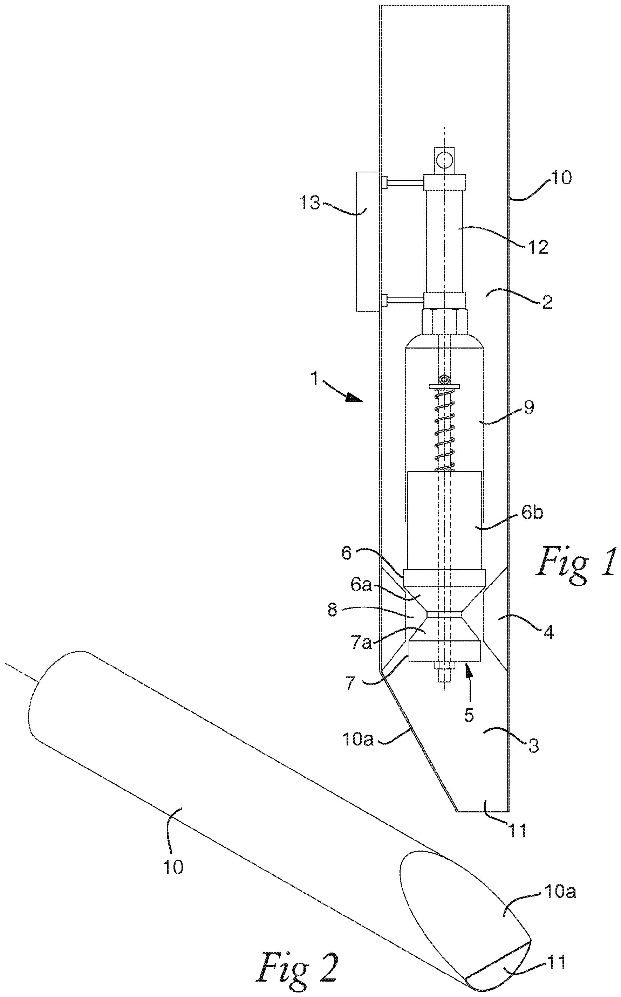

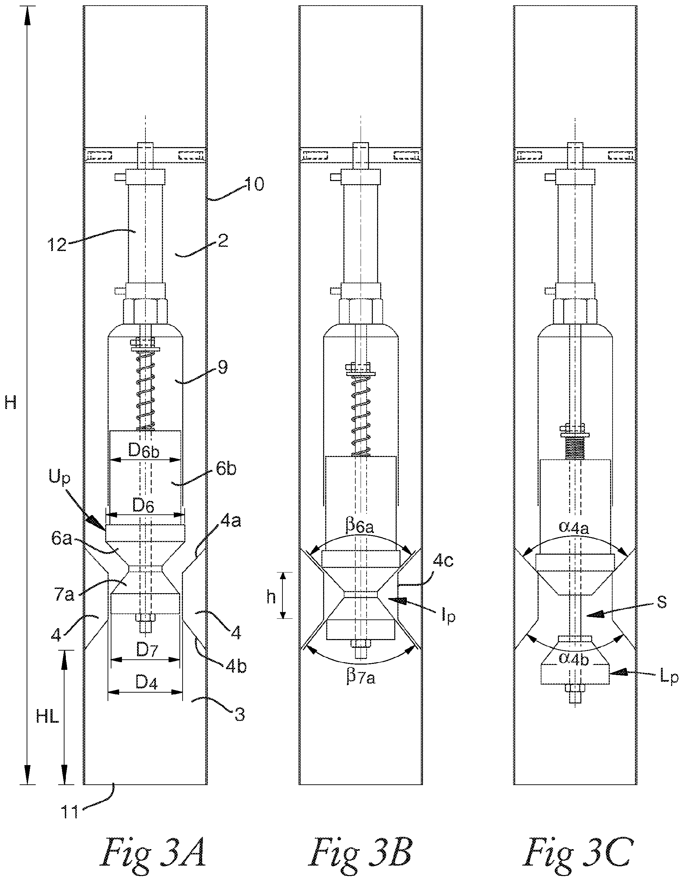

Fig. 1 is showing a feed dispenser for an animal according to an embodiment of the invention. The feed dispenser comprises an upper section 2 for containing the feed, a lower section 3 for dispensing the feed and a dosing chamber 4 situated between the upper section 2 and the lower section 3. The feed dispenser further comprises a dosing piston 5, which is coaxially arranged with the dosing chamber 4. The dosing piston 5 comprises a first body 6 having a first truncated conical surface portion 6a and a second body 7 having a second truncated conical surface portion 7a, wherein the first and second truncated conical surface portions 6a, 7a are arranged with their apexes facing each other, so that a dosing space 8 is formed between the first and second truncated conical surface portions 6a, 7a and the dosing chamber 4. The dosing piston 5 is reciprocatable between an upper position U_{P} (see also Fig 3A) for filling the dosing space 8 of the dosing chamber 4 with feed from the upper section 2 and a lower position L_{P} (see also Fig 3C) for discharging a dosed feed from the dosing space 8 of the dosing chamber 4 into the lower section 3. The first body 6 of the dosing piston 5 is slidably received in a stationary enclosure 9, which is situated in the upper section 2 containing the feed and is stationary with respect to the upper section 2 of the feed dispenser 1. The first body 6 includes a cylindrical end portion 6b and the stationary enclosure is forming a cylindrical casing 9 for slidably receiving the cylindrical end portion 6b of the first body 6. As can be seen in Fig 3A, the cylindrical end portion 6b has an outer diameter D_{6b} in a range of 80% - 100% of a maximum outer diameter D₆ of the first body 6. More precisely, the outer diameter D_{6b} of the cylindrical end portion 6b is approximately 90% of the maximum outer diameter D₆ of the first body 6 in the shown embodiment.

Fig 2 is showing an outer cover of the feed dispenser in the shape of a pipe 10, which is forming the upper section 2 for containing the feed and the lower section 3 for dispensing the feed. The cylindrical dosing chamber 4, the dosing piston 5 and the stationary enclosure 9 is situated inside the pipe 10, wherein an outlet 11 for dispensing the feed is provided at a lower end of the pipe 10. The lower section 3 of the pipe 10, as also shown in Fig 1, comprises a bevel surface 10a forming a tapering shape on the pipe towards the outlet 11 at the lower end of the pipe 10.

As shown in Figs 1 and 3A - 3C, the dosing piston 5 is connected to a linear actuator 12 in the form of a pneumatic cylinder for moving the dosing piston 5 between the upper and lower positions U_{P}, L_{P}. The linear actuator 12 is mounted in the upper section 2 of the feed dispenser 1 and the stationary enclosure 9 is arranged coaxially with the linear actuator 12. More precisely, as shown in Figs 3A - 3C, the linear actuator (pneumatic cylinder) 12 is mounted inside upper section of the pipe by means of a transverse rod (no reference sign), which is screwed into the outer cover or pipe at both of its ends. The linear actuator/pneumatic cylinder 12 is connected to a control unit 13, which is configured to actuate the linear actuator 12 at regular intervals during a specific time period, so that the feed dispenser is dispensing a dosed feed at the regular intervals during the specific time period.

Figs 3A - 3C is showing a sequence of the dosing piston 5 moving from the upper position U_{P} to the lower position L_{P}. As can be seen, the first body 6 is hereby slidably mounted on a piston rod 5a of the dosing piston 5 and the second body 7 is fixedly mounted on the piston rod 5a of the dosing piston 5. The first body 6 further has a maximum outer diameter D₆ that is larger than an inner diameter D₄ of the dosing chamber 4 and the second body 7 has a maximum outer diameter D₇ₐ that is smaller than the inner diameter D₄ of the dosing chamber 4, so that the second body 7 is slidably received into the dosing chamber 4 during an upward portion of the movement to the upper position U_{P}. Moreover, as can be seen in Fig 3C, the first body 6 is abutting the dosing chamber 4 and sliding on the piston rod 5a to provide an axial spacing S to the second body 7 that increases during a downward portion of the movement to the lower position L_{P}. Additionally, the first body 6 is elastically loaded (or spring-loaded) towards the second body 7 by an elastic member 14 (or spring), which is mounted on the piston rod 5a inside the stationary enclosure 9, wherein the elastic member/spring 14 is arranged to press the first body 6 towards the second body 7 when the axial spacing S is provided between the first body 6 and the second body 7. In other words, the first truncated conical surface portion 6a is spring-loaded into secure abutment with an upper annular end wall 4a of the dosing chamber 4 during a portion of the movement toward and away from the lower position L_{P}.

The dosing chamber 4 is hereby provided with the upper annular end wall 4a, which is facing the upper section 2 and is sloping towards the dosing space 8 of the dosing chamber 4, so that the upper annular end wall 4a is forming an apex angle α₄ₐ (see Fig 3C) as seen in a longitudinal section of the dosing chamber 4. Additionally, the first truncated conical surface portion 6a of the embodiment is forming an apex angle β₆ₐ (see Fig 3B) that corresponds to the apex angle α₄ₐ of the upper annular end wall 4a of the dosing chamber 4. The dosing chamber 4 is also provided with a lower annular end wall 4b, which is facing the lower section 3 and is sloping towards the dosing space 8 of the dosing chamber 4, so that the lower annular end wall 4b is forming an apex angle α_{4b} (see Fig 3C) as seen in a longitudinal section of the dosing chamber 4. Moreover, the second truncated conical surface portion 7a of the embodiment is forming an apex angle β₇ₐ (see Fig 3B) that corresponds to the apex angle α_{4b} of the lower annular end wall 4b of the dosing chamber 4.

As can be seen in Fig 3A, a total height extension H of the feed dispenser 1 is defined by the upper section 2, the lower section 3 and the dosing chamber 4 situated between the upper section 2 and the lower section 3. A relative height extension HL on the lower section 3 hereby amounts to at most 25%, and preferably at most 20%, of the total height extension H of the feed dispenser. More precisely, in the shown embodiment the relative height extension HL on the lower section 3 amounts to approximately 17% of the total height extension H on the feed dispenser. The height extension HL on the lower section 3 should preferably be no more than 20 cm, and more preferably at most 15 cm. In the shown embodiment the height extension HL on the lower section is around 13 cm.

The feed dispenser 1 dispenses the dosed feed by the linear actuator (pneumatic cylinder) 12 bringing the dosing piston 5 to the upper position U_{P}, as shown in Fig 3A, wherein the dosing space 8 is filled with the feed contained in the upper section 2 of the feed dispenser 1. The cylindrical end portion 6b of the first (upper) body 6 hereby slides into the cylindrical casing 9 situated in the upper section 2 to prevent any compression of the feed contained in the upper section 2. Furthermore, the second (lower) body 7 of the dosing piston 5 slides into the dosing chamber 4 and thereby prevents any leakage of feed to the lower section 3 of the feed dispenser when filling the dosing space 8. The dosing piston 5 is thereafter brought downwards by the linear actuator (pneumatic cylinder) 12, while the dosing space 8 continues to be filled with feed until the dosing piston 5 reaches an intermediate position I_{P} shown in Fig 3B. The dosing chamber 4 is hereby provided with a cylindrical inner wall portion 4c, which is surrounding the dosing piston 5, wherein the cylindrical inner wall portion 4c is configured with such a height h that the cylindrical inner wall portion 4c is forming an enclosed dosing space 8 with the first truncated conical surface portion 6a and the second truncated conical surface portion 7a in the intermediate position I_{P} of the dosing piston 5. An outer portion of the first (upper) truncated surface portion 6a further abuts the upper end wall 4a of the dosing chamber 4 and prevents any further communication with the upper section 2. A specific amount of dosed feed thereby occupies the dosing space 8 defined between the dosing chamber 4 and the first (upper) and second (lower) truncated conical surface portions 6a, 7a in the intermediate position I_{P} shown in Fig 3B. As the second (lower) body 7 of the dosing piston 5 continues downward toward the lower position L_{P}, as shown in Fig 3C, the dosed feed is dispensed into the lower section 3 of the feed dispenser 1. The first (upper) body 6 hereby slides on the piston rod 5a, while the spring 14 mounted on the piston rod 5a is compressed and forces the first (upper) truncated conical surface portion 6a into secure abutment against the upper end wall 4a of the dosing chamber 4. A continuously increasing axial spacing S is provided to the first (upper) body 6 until the second (lower) body 7 reaches the lower position L_{P} shown in Fig 3C. The linear actuator (pneumatic cylinder) 12 thereafter brings the dosing piston 5 back upwards toward the upper position, while the axial spacing S decreases and the compressed spring continues to force the first (upper) truncated conical surface portion 6a into continued secure abutment against the upper end wall 4a to prevent any leakage also during the upward movement of the dosing piston 5. From the intermediate position I_{P}, shown in Fig 3B, the second (lower) body 7 of the dosing piston 5 again slides into the dosing chamber 4 to prevent leakage of feed into the lower section 3 as the dosing piston 5 is brought toward the upper position U_{P} for filling the dosing space 8 as shown in Fig 3A. The linear actuator/pneumatic cylinder 12 is operated by the control unit 13, which actuates the linear actuator/pneumatic cylinder 12 at regular intervals (such as every 20 seconds) during a milking session, so that the feed dispenser is dispensing the dosed feed at the regular intervals (every 20 seconds) during the entire milking session.

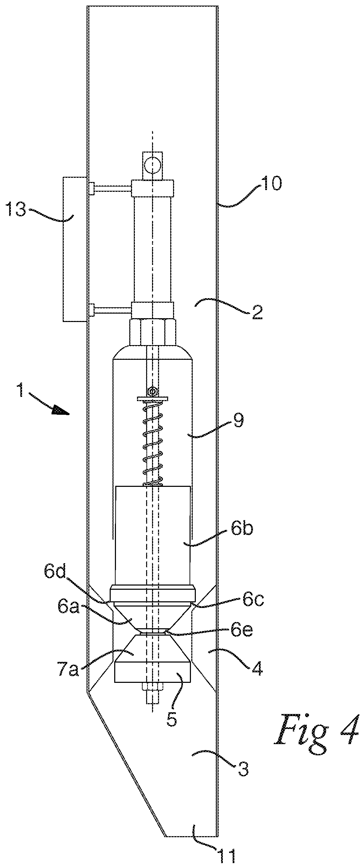

Fig 4 is showing a second embodiment of the feed dispenser. This second embodiment essentially only differs from the first embodiment of Figs 1 - 3 in that the first body 6 comprises an annular shoulder 6c between the first truncated conical surface portion 6a and an outer circumference of the first body 6, wherein an annular cutting edge 6d for cutting through the feed is formed in a transition between the annular shoulder 6c and the outer circumference of the first body 6. As can be seen the annular shoulder 6c provides a stepped portion between the first truncated conical surface portion and the outer circumference of the first body, wherein the annular shoulder 6c forms a relatively sharp annular (cutting) edge 6d in the transition to the outer circumference of the first body 6. The annular cutting edge 6d is hereby configured for cutting through the feed (pellets) contained in the upper section 2 of the feed dispenser 1. This annular cutting edge 6d can cut through the pellets located around the outer circumference and prevent them from getting stuck or crushed between the first body 6 and the upper annular end wall 4a of the dosing chamber 4. Furthermore, the second embodiment differs from the first embodiment in that the first body 6 also comprises a rounded or chamfered top surface 6e at the apex of the truncated conical surface portion 6a. The rounded/chamfered top surface 6e at the apex prevents feed (pellets) from getting stuck or crushed between the apexes of the first and second truncated conical surface portions 6a, 7a of the dosing piston 5. This enhances the reliability and precision of the feed dispenser as well as reduces/eliminates the noise that may arise from pellets being crushed between the apexes of the first and second body 6, 7. In all other aspects the second embodiment is essentially constructed and functions in the same manner as the first embodiment previously described.

## Claims

1. A feed dispenser (1) for an animal comprising:
- an upper section (2) for containing the feed, a lower section (3) for dispensing the feed, and a dosing chamber (4) situated between the upper section (2) and the lower section (3),
- a dosing piston (5) being coaxially arranged with the dosing chamber (4), the dosing piston (5) comprising a first body (6) having a first truncated conical surface portion (6a) and a second body (7) having a second truncated conical surface portion (7a), wherein the first and second truncated conical surface portions (6a, 7a) are arranged with their apexes facing each other, so that a dosing space (8) is formed between the first and second truncated conical surface portions (6a, 7a) and the dosing chamber (4),
- the dosing piston (5) being reciprocatable between an upper position (U_{P}) for filling the dosing space (8) of the dosing chamber (4) with feed from the upper section (2) and a lower position (L_{P}) for discharging a dosed feed from the dosing space (8) of the dosing chamber (4) into the lower section (3), wherein the first body (6) is slidably received in a stationary enclosure (9), which is situated in the upper section (2) containing the feed and is stationary with respect to the upper section (2) of the feed dispenser (1), wherein the first body (6) is slidably mounted on a piston rod (5a) of the dosing piston (5) and the second body (7) is fixedly mounted on the piston rod (5a) of the dosing piston (5), wherein the first body (6) has a maximum outer diameter (D₆) that is larger than an inner diameter (D₄) of the dosing chamber (4), and the second body (7) has a maximum outer diameter (D₇ₐ) that is smaller than the inner diameter (D₄) of the dosing chamber (4), so that the second body (7) is slidably received into the dosing chamber (4) during an upward portion of the movement to the upper position (U_{P}), wherein the first body (6) is abutting the dosing chamber and sliding on the piston rod (5a) to provide an axial spacing (S) to the second body (7) that increases during a downward portion of the movement to the lower position (L_{P}), and the dosing chamber (4) comprises a cylindrical inner wall portion (4c), which is surrounding the dosing piston (5), the cylindrical inner wall portion (4c) being configured with such a height (h) that the cylindrical inner wall portion (4c) is forming an enclosed dosing space (8) with the first truncated conical surface portion (6a) and the second truncated conical surface portion (7a) in an intermediate position (I_{P}) of the dosing piston (5).

2. The feed dispenser of claim 1, wherein the first body (6) includes a cylindrical end portion (6b) and the stationary enclosure is forming a cylindrical casing (9) for slidably receiving the cylindrical end portion (6b) of the first body (6).

3. The feed dispenser of claim 2, wherein the cylindrical end portion (6b) has an outer diameter (D_{6b}) in a range of 80% - 100% of a maximum outer diameter (D₆) of the first body (6).

4. The feed dispenser according to any one of claims 1 - 3, wherein the feed dispenser comprises an outer cover in the form of a pipe (10), which is forming the upper section (2) for containing the feed and the lower section (3) for dispensing the feed, the cylindrical dosing chamber (4), the dosing piston (5) and the stationary enclosure (9) being situated inside the pipe (10), wherein an outlet (11) for dispensing the feed is provided at a lower end of the pipe (10).

5. The feed dispenser of claim 4, wherein the lower section (3) of the pipe (10) comprises a bevel surface (10a) forming a tapering shape on the pipe towards the outlet (11) at the lower end of the pipe (10).

6. The feed dispenser according to any one of claims 1 - 5, wherein the dosing piston (5) is connected to a linear actuator (12), preferably a pneumatic cylinder, for moving the dosing piston (5) between the upper and lower positions (U_{P}, L_{P}), wherein the linear actuator (12) is mounted in the upper section (2) of the feed dispenser (1) and the stationary enclosure (9) is arranged coaxially with the linear actuator (12).

7. The feed dispenser of claim 6, wherein the linear actuator (12) is connected to a control unit (13), which is configured to actuate the linear actuator (12) at regular intervals during a specific time period, so that the feed dispenser is dispensing a dosed feed at the regular intervals during the specific time period.

8. The feed dispenser of any one of claims 1 - 7, wherein the first body (6) is elastically loaded towards the second body (7) by an elastic member (14), such as a spring, which is mounted on the piston rod (5a) inside the stationary enclosure (9), wherein the elastic member (14) is arranged to press the first body (6) towards the second body (7) when the axial spacing (S) is provided between the first body (6) and the second body (7).

9. The feed dispenser according to any one of claims 1 - 8, wherein the dosing chamber (4) has an upper annular end wall (4a), which is facing the upper section (2) and is sloping towards the dosing space (8) of the dosing chamber (4), so that the upper annular end wall (4a) is forming an apex angle (α₄ₐ) as seen in a longitudinal section of the dosing chamber (4).

10. The feed dispenser of claim 9, wherein first truncated conical surface portion (6a) is forming an apex angle (β₆ₐ) that corresponds to the apex angle (α₄ₐ) of the upper annular end wall (4a) of the dosing chamber (4).

11. The feed dispenser according to any one of claims 1 - 10, wherein the dosing chamber (4) has a lower annular end wall (4b), which is facing the lower section (3) and is sloping towards the dosing space (8) of the dosing chamber (4), so that the lower annular end wall (4b) is forming an apex angle (α_{4b}) as seen in a longitudinal section of the dosing chamber (4).

12. The feed dispenser of claim 11, wherein the second truncated conical surface portion (7a) is forming an apex angle (β₇ₐ) that corresponds to the apex angle (α_{4b}) of the lower annular end wall (4b) of the dosing chamber (4).

13. The feed dispenser according to any one of claims 1 - 12, wherein the upper section (2), the lower section (3) and the dosing chamber (4) situated between the upper section (2) and the lower section (3) define a total height extension (H) of the feed dispenser (1), wherein a relative height extension (HL) on the lower section (3) amounts to at most 25%, preferably at most 20%, of the total height extension (H) of the feed dispenser.

14. The feed dispenser according to any one of claims 1 - 13, wherein the first body (6) comprises an annular shoulder (6c) between the first truncated conical surface portion (6a) and an outer circumference of the first body (6), wherein an annular cutting edge (6d) for cutting through the feed is formed in a transition between the annular shoulder (6c) and the outer circumference of the first body (6).

15. The feed dispenser according to any one of claims 1 - 14, wherein the first body (6) comprises a rounded or chamfered top surface (6e) at the apex of the truncated conical surface portion (6a).

## Patentansprüche

1. Futterspender (1) für ein Lebewesen, umfassend:
- einen oberen Abschnitt (2) zum Fassen des Futters, einen unteren Abschnitt (3) zum Spenden des Futters und eine Dosierkammer (4), die zwischen dem oberen Abschnitt (2) und dem unteren Abschnitt (3) gelegen ist,
- einen Dosierkolben (5), der zu der Dosierkammer (4) koaxial angeordnet ist, der Dosierkolben (5) umfassend einen ersten Körper (6), der einen ersten kegelstumpfförmigen Oberflächenteil (6a) aufweist, und einen zweiten Körper (7), der einen zweiten kegelstumpfförmigen Oberflächenteil (7a) aufweist, wobei der erste und der zweite kegelstumpfförmige Oberflächenteil (6a, 7a) mit ihren Spitzen einander zugewandt angeordnet sind, sodass ein Dosierraum (8) zwischen dem ersten und dem zweiten kegelstumpfförmigen Oberflächenteil (6a, 7a) und der Dosierkammer (4) ausgebildet ist,
- wobei der Dosierkolben (5) zwischen einer oberen Position (U_{P}) zum Befüllen des Dosierraums (8) der Dosierkammer (4) mit Futter aus dem oberen Abschnitt (2) und einer unteren Position (L_{P}) zum Spenden eines dosierten Futters aus dem Dosierraum (8) der Dosierkammer (4) in den unteren Abschnitt (3) hin- und herbewegbar ist, wobei der erste Körper (6) in einem stationären Gehäuse (9) gleitend aufgenommen ist, die in dem oberen Abschnitt (2), der das Futter fasst, gelegen ist, und in Bezug auf den oberen Abschnitt (2) des Futterspenders (1) stationär ist, wobei der erste Körper (6) an einer Kolbenstange (5a) des Dosierkolbens (5) gleitend montiert ist und der zweite Körper (7) an der Kolbenstange (5a) des Dosierkolbens (5) fest montiert ist, wobei der erste Körper (6) einen maximalen Außendurchmesser (D₆), der größer als ein Innendurchmesser (D₄) der Dosierkammer (4) ist, aufweist und der zweite Körper (7) einen maximalen Außendurchmesser (D₇ₐ), der kleiner als der Innendurchmesser (D₄) der Dosierkammer (4) ist, aufweist, sodass der zweite Körper (7) während eines nach oben gerichteten Teils der Bewegung zu der oberen Position (U_{P}) in der Dosierkammer (4) gleitend aufgenommen wird, wobei der erste Körper (6) an der Dosierkammer anliegt und auf der Kolbenstange (5a) gleitet, um einen axialen Abstand (S) zu dem zweiten Körper (7) bereitzustellen, der während eines nach unten gerichteten Teils der Bewegung in die untere Position (L_{P}) zunimmt, und die Dosierkammer (4) einen zylindrischen Innenwandteil (4c), der den Dosierkolben (5) umgibt, umfasst, wobei der zylindrische Innenwandteil (4c) mit einer derartigen Höhe (h) konfiguriert ist, dass der zylindrische Innenwandteil (4c) einen geschlossenen Dosierraum (8) ausbildet, wobei sich der erste kegelstumpfförmige Oberflächenteil (6a) und der zweite kegelstumpfförmige Oberflächenteil (7a) in einer Zwischenposition (I_{P}) des Dosierkolbens (5) befinden.

2. Futterspender nach Anspruch 1, wobei der erste Körper (6) einen zylindrischen Endteil (6b) einschließt und das stationäre Gehäuse eine zylindrische Ummantelung (9) zum gleitenden Aufnehmen des zylindrischen Endteils (6b) des ersten Körpers (6) ausbildet.

3. Futterspender nach Anspruch 2, wobei der zylindrische Endteil (6b) einen Außendurchmesser (D_{6b}) in einem Bereich von 80 % bis 100 % eines maximalen Außendurchmessers (D₆) des ersten Körpers (6) aufweist.

4. Futterspender nach einem der Ansprüche 1 bis 3, wobei der Futterspender eine äußere Abdeckung in der Form eines Rohrs (10) umfasst, das den oberen Abschnitt (2) zum Fassen des Futters und den unteren Abschnitt (3) zum Spenden des Futters ausbildet, wobei die zylindrische Dosierkammer (4), der Dosierkolben (5) und das stationäre Gehäuse (9) innerhalb des Rohrs (10) gelegen sind, wobei ein Auslass (11) zum Spenden des Futters an einem unteren Ende des Rohrs (10) bereitgestellt ist.

5. Futterspender nach Anspruch 4, wobei der untere Abschnitt (3) des Rohrs (10) eine schräge Oberfläche (10a) umfasst, die eine sich verjüngende Form an dem Rohr in Richtung des Auslasses (11) an dem unteren Ende des Rohrs (10) ausbildet.

6. Futterspender nach einem der Ansprüche 1 bis 5, wobei der Dosierkolben (5) mit einem linearen Betätigungselement (12), vorzugsweise einem pneumatischen Zylinder, zum Bewegen des Dosierkolbens (5) zwischen der oberen und der unteren Position (U_{P}, L_{P}) verbunden ist, wobei das lineare Betätigungselement (12) in dem oberen Abschnitt (2) des Futterspenders (1) montiert ist und das stationäre Gehäuse (9) zu dem linearen Betätigungselement (12) koaxial angeordnet ist.

7. Futterspender nach Anspruch 6, wobei das lineare Betätigungselement (12) mit einer Steuereinheit (13) verbunden ist, die konfiguriert ist, um das lineare Betätigungselement (12) in regelmäßigen Abständen während eines bestimmten Zeitraums zu betätigen, sodass der Futterspender in den regelmäßigen Abständen während des bestimmten Zeitraums ein dosiertes Futter spendet.

8. Futterspender nach einem der Ansprüche 1 bis 7, wobei der erste Körper (6) durch ein elastisches Element (14), wie eine Feder, die an der Kolbenstange (5a) innerhalb des stationären Gehäuses (9) montiert ist, in Richtung des zweiten Körpers (7) elastisch belastet wird, wobei das elastische Element (14) angeordnet ist, um den ersten Körper (6) in Richtung des zweiten Körpers (7) zu drücken, wenn der axiale Abstand (S) zwischen dem ersten Körper (6) und dem zweiten Körper (7) bereitgestellt ist.

9. Futterspender nach einem der Ansprüche 1 bis 8, wobei die Dosierkammer (4) eine obere ringförmige Endwand (4a) aufweist, die dem oberen Abschnitt (2) zugewandt ist und in Richtung des Dosierraums (8) der Dosierkammer (4) geneigt ist, sodass die obere ringförmige Endwand (4a) einen Spitzenwinkel (α₄ₐ), betrachtet in einem Längsschnitt der Dosierkammer (4), ausbildet.

10. Futterspender nach Anspruch 9, wobei der erste kegelstumpfförmige Oberflächenteil (6a) einen Spitzenwinkel (β₆ₐ) ausbildet, der dem Spitzenwinkel (α₄ₐ) der oberen ringförmigen Endwand (4a) der Dosierkammer (4) entspricht.

11. Futterspender nach einem der Ansprüche 1 bis 10, wobei die Dosierkammer (4) eine untere ringförmige Endwand (4b) aufweist, die dem unteren Abschnitt (3) zugewandt ist und in Richtung des Dosierraums (8) der Dosierkammer (4) geneigt ist, sodass die untere ringförmige Endwand (4b) einen Spitzenwinkel (α_{4b}), betrachtet in einem Längsschnitt der Dosierkammer (4), ausbildet.

12. Futterspender nach Anspruch 11, wobei der zweite kegelstumpfförmige Oberflächenteil (7a) einen Spitzenwinkel (β₇ₐ) ausbildet, der dem Spitzenwinkel (α_{4b}) der unteren ringförmigen Endwand (4b) der Dosierkammer (4) entspricht.

13. Futterspender nach einem der Ansprüche 1 bis 12, wobei der obere Abschnitt (2), der untere Abschnitt (3) und die Dosierkammer (4), die zwischen dem oberen Abschnitt (2) und dem unteren Abschnitt (3) gelegen ist, eine Gesamthöhenerstreckung (H) des Futterspenders (1) definieren, wobei eine relative Höhenerstreckung (HL) an dem unteren Abschnitt (3) höchstens 25 %, vorzugsweise höchstens 20 %, der Gesamthöhenerstreckung (H) des Futterspenders beträgt.

14. Futterspender nach einem der Ansprüche 1 bis 13, wobei der erste Körper (6) eine ringförmige Schulter (6c) zwischen dem ersten kegelstumpfförmigen Oberflächenteil (6a) und einem Außenumfang des ersten Körpers (6) umfasst, wobei eine ringförmige Schneidkante (6d) zum Durchschneiden des Futters in einem Übergang zwischen der ringförmigen Schulter (6c) und dem Außenumfang des ersten Körpers (6) ausgebildet ist.

15. Futterspender nach einem der Ansprüche 1 bis 14, wobei der erste Körper (6) eine abgerundete oder abgeschrägte oberste Oberfläche (6e) an der Spitze des kegelstumpfförmigen Oberflächenteils (6a) umfasst.

## Revendications

1. Distributeur d'aliments (1) pour un animal comprenant :
- une section supérieure (2) destinée à contenir l'aliment, une section inférieure (3) destinée à distribuer l'aliment, et une chambre de dosage (4) située entre la section supérieure (2) et la section inférieure (3),
- un piston de dosage (5) agencé de manière coaxiale avec la chambre de dosage (4), le piston de dosage (5) comprenant un premier corps (6) ayant une première partie de surface tronconique (6a) et un second corps (7) ayant une seconde partie de surface tronconique (7a), dans lequel les première et seconde parties de surface tronconique (6a, 7a) sont agencées avec leurs sommets se faisant face, de sorte qu'un espace de dosage (8) est formé entre les première et seconde parties de surface tronconique (6a, 7a) et la chambre de dosage (4),
- le piston de dosage (5) de type va-et-vient entre une position supérieure (U_{P}) pour remplir l'espace de dosage (8) de la chambre de dosage (4) avec des aliments provenant de la section supérieure (2) et une position inférieure (L_{P}) pour décharger des aliments dosés de l'espace de dosage (8) de la chambre de dosage (4) dans la section inférieure (3), dans lequel le premier corps (6) est reçu de manière coulissante dans une enceinte fixe (9), qui est située dans la section supérieure (2) contenant les aliments et est fixe par rapport à la section supérieure (2) du distributeur d'aliments (1), dans lequel le premier corps (6) est monté de manière coulissante sur une tige de piston (5a) du piston de dosage (5) et le second corps (7) est monté de manière fixe sur la tige de piston (5a) du piston de dosage (5), dans lequel le premier corps (6) a un diamètre externe maximal (D₆) qui est plus grand qu'un diamètre interne (D₄) de la chambre de dosage (4), et le second corps (7) a un diamètre externe maximal (D₇ₐ) inférieur au diamètre interne (D₄) de la chambre de dosage (4), de sorte que le second corps (7) est reçu de manière coulissante dans la chambre de dosage (4) pendant une partie ascendante du mouvement vers la position supérieure (U_{P}), dans lequel le premier corps (6) vient en butée contre la chambre de dosage et coulisse sur la tige de piston (5a) pour fournir un espacement axial (S) au second corps (7) qui augmente pendant une partie descendante du mouvement vers la position inférieure (L_{P}), et la chambre de dosage (4) comprend une partie de paroi interne cylindrique (4c) qui entoure le piston de dosage (5), la partie de paroi interne cylindrique (4c) étant conçue avec une hauteur (h) telle que la partie de paroi interne cylindrique (4c) forme un espace de dosage fermé (8) avec la première partie de surface tronconique (6a) et la seconde partie de surface tronconique (7a) dans une position intermédiaire (I_{P}) du piston de dosage (5).

2. Distributeur d'aliments selon la revendication 1, dans lequel le premier corps (6) comporte une partie d'extrémité cylindrique (6b) et l'enceinte fixe forme un boîtier cylindrique (9) permettant de recevoir de manière coulissante la partie d'extrémité cylindrique (6b) du premier corps (6).

3. Distributeur d'aliments selon la revendication 2, dans lequel la partie d'extrémité cylindrique (6b) a un diamètre externe (D_{6b}) dans la plage de 80 % à 100 % du diamètre externe maximal (D₆) du premier corps (6).

4. Distributeur d'aliments selon l'une quelconque des revendications 1 à 3, dans lequel le distributeur d'aliments comprend un couvercle externe sous la forme d'un tuyau (10), qui forme la section supérieure (2) destinée à contenir les aliments et la section inférieure (3) destinée à distribuer les aliments, la chambre de dosage cylindrique (4), le piston de dosage (5) et l'enceinte fixe (9) étant situés à l'intérieur du tuyau (10), dans lequel une sortie (11) pour distribuer les aliments est prévue à une extrémité inférieure du tuyau (10).

5. Distributeur d'aliments selon la revendication 4, dans lequel la section inférieure (3) du tuyau (10) comprend une surface en biseau (10a) formant une forme effilée sur le tuyau vers la sortie (11) à l'extrémité inférieure du tuyau (10).

6. Distributeur d'aliments selon l'une quelconque des revendications 1 à 5, dans lequel le piston de dosage (5) est relié à un actionneur linéaire (12), de préférence un cylindre pneumatique, pour déplacer le piston de dosage (5) entre les positions supérieure et inférieure (U_{P}, L_{P}), dans lequel l'actionneur linéaire (12) est monté dans la section supérieure (2) du distributeur d'aliments (1) et l'enceinte fixe (9) est agencée de manière coaxiale avec l'actionneur linéaire (12).

7. Distributeur d'aliments selon la revendication 6, dans lequel l'actionneur linéaire (12) est connecté à une unité de commande (13), qui est conçue pour actionner l'actionneur linéaire (12) à intervalles réguliers pendant une période de temps spécifique, de sorte que le distributeur d'aliments distribue un aliment dosé à intervalles réguliers pendant la période de temps spécifique.

8. Distributeur d'aliments selon l'une quelconque des revendications 1 à 7, dans lequel le premier corps (6) est chargé élastiquement vers le second corps (7) par un élément élastique (14), tel qu'un ressort, qui est monté sur la tige de piston (5a) à l'intérieur de l'enceinte fixe (9), dans lequel l'élément élastique (14) est ménagé pour presser le premier corps (6) vers le second corps (7) lorsque l'espacement axial (S) est prévu entre le premier corps (6) et le second corps (7).

9. Distributeur d'aliments selon l'une quelconque des revendications 1 à 8, dans lequel la chambre de dosage (4) a une paroi d'extrémité annulaire supérieure (4a), qui fait face à la section supérieure (2) et qui est inclinée vers l'espace de dosage (8) de la chambre de dosage (4), de sorte que la paroi d'extrémité annulaire supérieure (4a) forme un angle de sommet (α₄ₐ) vu dans une section longitudinale de la chambre de dosage (4).

10. Distributeur d'aliments selon la revendication 9, dans lequel la première partie de surface tronconique (6a) forme un angle de sommet (β₆ₐ) qui correspond à l'angle de sommet (α₄ₐ) de la paroi d'extrémité annulaire supérieure (4a) de la chambre de dosage (4).

11. Distributeur d'aliments selon l'une quelconque des revendications 1 à 10, dans lequel la chambre de dosage (4) a une paroi d'extrémité annulaire inférieure (4b), qui fait face à la section inférieure (3) et est inclinée vers l'espace de dosage (8) de la chambre de dosage (4), de sorte que la paroi d'extrémité annulaire inférieure (4b) forme un angle de sommet (α_{4b}) vu dans une section longitudinale de la chambre de dosage (4).

12. Distributeur d'aliments selon la revendication 11, dans lequel la seconde partie de surface tronconique (7a) forme un angle de sommet (β₇ₐ) qui correspond à l'angle de sommet (α_{4b}) de la paroi d'extrémité annulaire inférieure (4b) de la chambre de dosage (4).

13. Distributeur d'aliments selon l'une quelconque des revendications 1 à 12, dans lequel la section supérieure (2), la section inférieure (3) et la chambre de dosage (4) située entre la section supérieure (2) et la section inférieure (3) définissent une extension de hauteur totale (H) du distributeur d'aliments (1), dans lequel une extension de hauteur relative (HL) sur la section inférieure (3) s'élève à au plus 25 %, de préférence au plus 20 %, de l'extension de hauteur totale (H) du distributeur d'aliments.

14. Distributeur d'aliments selon l'une quelconque des revendications 1 à 13, dans lequel le premier corps (6) comprend un épaulement annulaire (6c) entre la première partie de surface tronconique (6a) et une circonférence externe du premier corps (6), dans lequel un bord de coupe annulaire (6d) pour couper l'aliment est formé dans une transition entre l'épaulement annulaire (6c) et la circonférence extérieure du premier corps (6).

15. Distributeur d'aliments selon l'une quelconque des revendications 1 à 14, dans lequel le premier corps (6) comprend une surface supérieure arrondie ou chanfreinée (6e) au sommet de la partie de surface tronconique (6a).
